# EUROPEAN PATENT APPLICATION

(11) **EP 1 983 490 A1**
(43) Date of publication of application: **22.10.2008**
(21) Application number: 07290492.3
(22) Date of filing: 20.04.2007
(51) Int. Cl.: G07F 7/08, G06Q 20/00

(54) **Transmission of discount tickets in a mobile tv stream.**

(71) Applicant: Axalto S.A., 92190 Meudon (FR); Gemplus S.A., 13420 Gémenos (FR)
(72) Inventor: Rangoni, Gabriel, 92190 Meudon (FR); Barbe, Serge, 13420 Gémenos (FR); Guiragossian, Michel, 13420 Gémenos (FR)
(74) Representative: Jacquot, Ludovic R. G.

(57) **Abstract**

The invention relates to a digital method for transferring a financial right comprising the step which consists in transiting a financial right over a digital channel from a right delivering entity to a right benefiting entity (30), characterized in that the digital channel is a mobile TV broadcast stream (60).

## Description

The invention relates to transfers of financial rights by means of digital equipments. In particular the invention relates to the transfer of a financial right onto a mobile equipment of an end-user such as a mobile phone.

Financial transfers are well-known which consist in debiting a remote bank account of a buyer for the benefit of the bank account of a seller by means of a credit card inserted into a card reader at a cashier desk of the seller. The card identifies the remote bank account and allows a determined amount to be debited from the remote bank account, the determined amount being thereby transferred digitally from the bank account of the buyer and onto the bank account of the seller.

Financial transfers also exist on the internet, which consist in providing card identifying data to an e-merchant in association with a displayed payment amount, thereby allowing the e-merchant to be credited of the displayed amount, actually transferring onto the e-merchant a financial right.

Transfer of financial rights is also known by use of credit cards or e-purse cards which are enabled for NFC - Near Field Communication, by a simple action which consists in placing the card in close proximity to a NFC reader operable for such transfer. An e-purse card may also be programmed for being credited in the same manner.

Such financial right transfer schemes are all aimed at making easier the process of right transfer, thereby suppressing as much as possible the technical burden of getting or delivering rights between given equipments of the considered economic players.

However, a need remains for making still easier the transfer of financial rights, either from the side of the rights getting entity or from the side of the rights delivering entity.

This purpose is achieved by means of the invention as recited in the appended claims.

Other aspects, purposes and advantages of the invention will appear through the following description which is made in reference to the appended claims, among which :
- figure 1 is a represents schematically a context according to a preferred embodiment of the invention,
- figure 2 represents a set of terminals in a preferred embodiment of the invention,
- figure 3 represents a broadcast stream according to the same embodiment of the invention,
- Figure 4 represents a mobile terminal according to an embodiment of the invention.

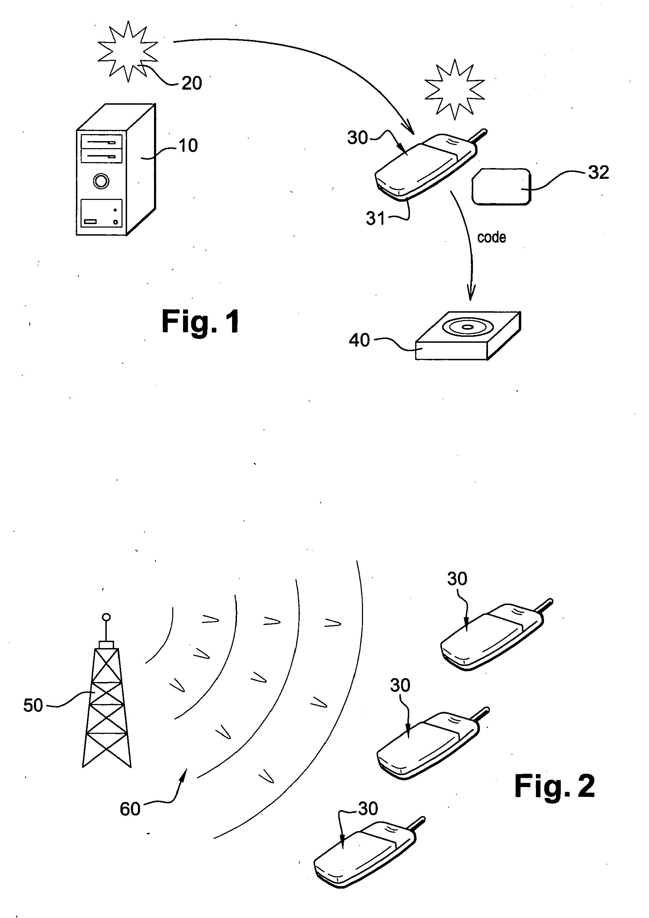

On figure 1, a remote server 10 sends a financial right 20 to a mobile equipment 30. The mobile equipment 30 comprises a mobile terminal 31 and a subscriber identity module 32 hosted in the mobile terminal. The mobile equipment 30 is a mobile phone, the subscriber identity module thereby allowing the associated end-user to access to a telephony network thanks to the credentials securely stored inside the subscriber identity module 32.

The financial right 20 is a discount ticket allowing the end-user to actually pay a reduced amount onto a specific product in a specific retailer shop. The discount ticket therefore has the financial right of the corresponding discount which is about to be granted by the retailer shop if the product is actually bought by the end-user.

For the purpose of payments, the Mobile equipment 30 is Near Field Communication enabled. In the present case the mobile equipment 30 comprises a subscriber identity module 32 which hosts a payment application over a communication protocol specially adapted for communicating data over an antenna of the mobile equipment.

Such antenna is a Near Field Communication antenna embedded in the mobile terminal 31 which describes a loop at the periphery thereof.

The payment application of the subscriber identity module 32 comprises credentials for authorizing a bank account to be debited when the mobile equipment 30 is placed in close proximity to an ascertained NFC reader 40.

Once the discount ticket 20 stored inside the memory of the subscriber identity module 32, the discount ticket will be used when proceeding to a payment by means of the NFC ability of the mobile equipment 30.

The present discount ticket is made of a set of instructions which are executed by the subscriber identity module 32 when proceeding to a payment. The set of instructions combine with instructions of the payment module of the subscriber identity module 32, so as to be executed before the instructions of the payment module. For that purpose, the discount ticket instructions are stored in a part of the memory of the subscriber identity module which is dedicated to executable programs and which part of the memory is read as a first step before executing the payment application.

When proceeding to payment of a product, for example the last cheese hamburger in a fast food restaurant, the NFC enabled mobile equipment 30 is placed closely above the NFC reader 40, and the subscriber identity module 32 first executes the discount ticket instructions. Those instructions control the subscriber module 32 into sending a special code, stored among the instructions of the discount ticket 20, to the NFC reader 40 of the merchant. When proceeding to payment of the cheeseburger, the NFC reader 40 sends an authorization request to the nearby NFC mobile equipment with the required amount for the cheeseburger, and monitors the reply messages from the mobile equipment 30. The NFC mobile equipment 30 then executes the discount ticket instructions and sends the special code to the NFC reader of the merchant. The reader receives the special code and recognizes it.

The NFC reader 40 then executes an amount modifying program, which neutralized the original payment request and makes a new payment request for an amount that is reduced of an amount corresponding to the discount ticket as stored in the database of the merchant which is connected to the NFC reader 40.

The NFC reader 40 of the merchant also sends a specific message to the NFC equipment 30 which is recognized by the discount ticket application and neutralizes the sending of the special code by the discount ticket application at the next payment request as received by the mobile equipment 30.

Preferably, the discount ticket 20 comprises an identifier of the NFC reader(s) of the merchant among the instructions of the discount ticket application, so as to deliver the discount ticket code only if an NFC reader 40 of the proper merchant has been identified as being in close proximity to the NFC mobile equipment. The NFC reader 40 identifies itself to the NFC mobile equipment 30 at the beginning of the payment process for such purpose.

The NFC reader then proceeds to a new payment request for the reduced payment amount and the NFC payment is realized.

In an alternate embodiment, the discount ticket 20 consists only in the specific code to be transmitted to the NFC reader, and the discount ticket application is a set of instructions which pre-exists in the subscriber identity module 32, whose role is to deliver the discount ticket code to the proper NFC reader, once such reader has sent a payment request to the NFC mobile equipment and such reader has been recognized.

In still an alternate embodiment, the subscriber identity module 32 comprises an e-purse application and memory dedicated to discount tickets. In such alternate embodiment, the discount tickets in e-purse memory comprise a paying amount and specify a corresponding merchant. The e-purse application authorized the amount of the discount ticket to be debited from the e-purse memory only if a NFC reader of the associated merchant is recognized.

The e-purse application is automatically triggered by the payment application each time a payment is about to be done, the memory of the e-purse being automatically interrogated by the e-purse application for the current merchant reader and discount ticket is used if any before the payment application authorizes the payment.

In addition to NFC functionality, the present mobile equipment 30 is operable for receiving and displaying live mobile TV programs. As depicted on figure 2, a remote broadcast server 50 broadcasts mobile TV programs on a set of mobile equipment such as equipment 30, all referenced 30 on figure 2 for the sake of simplicity.

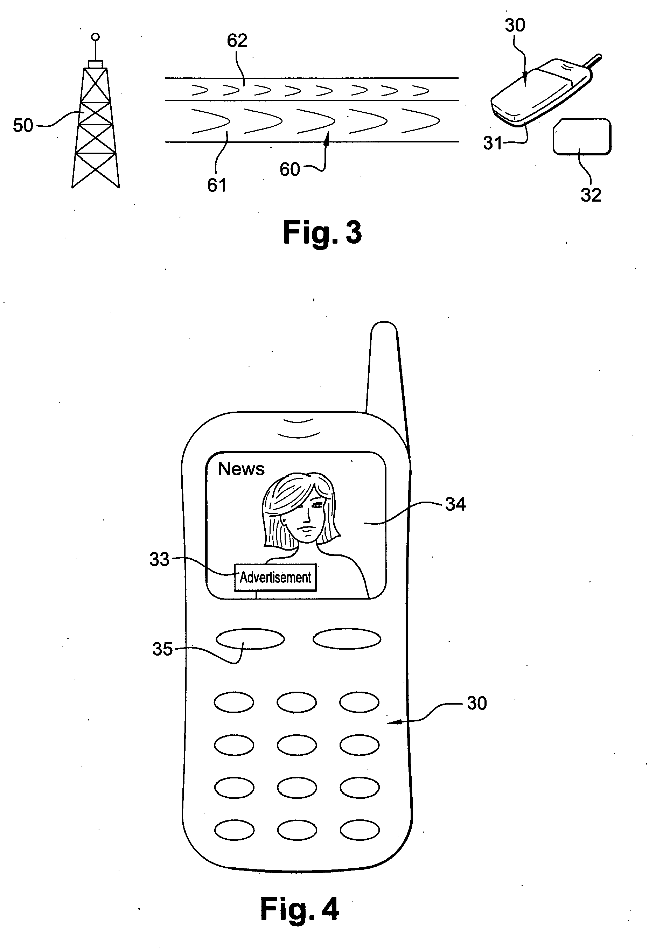

A stream of data 60 transits from the remote broadcast entity 50 to the mobile equipments 30 which is represented on figure 3.

Stream 60 comprises mobile TV data 61 which represent the most part of the stream, and comprises also a reserved channel 62 for carrying data which may be used for other purposes. Such channel 62 is originally aimed at carrying menu data or additional information data such as those appearing as icons onto displayed mobile TV images which may be erased from the screen by simple actuation of a dedicated button on the keyboard of the mobile equipment 30.

It is proposed in the present embodiment to carry an advertisement icon 33 in such channel 62, which appears as on icon (figure 4) on a screen 34 of the mobile equipment 30.

Mobile equipment 30 hosts an advertising display application which receives data describing the icon 34, recognizes such data and displays the icon 34 described by such data on screen 33.

The advertising icon comprises a message which invites the end-user to actuate such icon by pressing on a particular button, here the closest button to the icon, referenced 35 on figure 4. The advertising display application monitors actuation of button 35 and, when the end-user presses such button, displays a detailed advertisement screen on the same product as the one announced in the icon 33.

For displaying the detailed advertisement screen the application retrieves data describing such detailed advertisement screen from channel 62.

In the presently described embodiment, icon 33 displays a message of the type : "display X cheeseburger advertisement and get a 0,5 euros discount at your nearest X cheeseburger shop".

When the end-user decides to actuate icon 33, the detailed advertisement screen is displayed, and such screen also displays a message of the type "you have obtained a special 0,5 euros discount right stored in your NFC mobile equipment which may be used in your nearest X burgers shop".

For the purpose of such process, channel 62 is used not only for carrying the data of the icon 33 and the data of the detailed advertisement screen, but also for carrying a discount ticket 20 as the one previously described.

The icon data are first broadcasted in stream 60, more precisely in channel 62, and the discount ticket data are the broadcasted inside channel 62 for a certain period of time so that the discount data are retrieved from channel 62 whenever the end-user actuates icon 33.

The advertisement display application, when it displays the detailed advertisement screen, triggers a discount ticket retrieving application which retrieves the discount ticket data from channel 62, and stores them in the mobile equipment 30.

Preferably, the discount ticket is stored inside the memory of the subscriber identity module 32. discount ticket retrieving application is preferably hosted also inside the subscriber identity module 32. Such retrieving application stores or installs the discount ticket into the memory of subscriber identity module, according to whether the the discount ticket is an application or a set of data, i.e.reduced to discount code and NFC reader(s) identifier as in one of the previously described examples.

In an alternate embodiment, the discount ticket is retrieved at the same time as the data for the advertisement icon 33, the discount ticket being stored in a neutral status, and the discount ticket is transformed into an active status by a dedicated application when the end-user actuates the icon 33. For that purpose, a special code is retrieved from channel 62 when the end-user actuates icon 33, which special code is combined with neutral status discount ticket for transforming the discount ticket into active status. Retrieving of the special code for making the discount ticket active and combining the discount ticket with activating code is preferably performed by an activating application in the subscriber identity module 32 which activating application is triggered by the advertisement display application. In such embodiment, the financial right is made of the neutral discount ticket combined with the activating code.

In a particular embodiment, the discount ticket may be used for a plurality of purchases, either with a decrementing counter for each use of the discount ticket, the decrementing ticket being in the database of the merchant or in the mobile equipment 30, either on a predetermined period of time which is monitored either in the database of the merchant or in the mobile equipment.

The invention is not limited to mobile telephony. A mobile terminal operable for mobile TV but not for telephony, i.e. an "unconnected" device may also be used for receiving such a financial right, preferably a discount ticket and making use of such, preferably through an NFC payment module of the mobile TV terminal.

Other means may be implemented for making use of the retrieved financial right or financial value. For example, the discount ticket may be constituted by image data that are displayed on the screen of the mobile equipment. A particular discount ticket image may be recognized by a cashier attendant which will then grant the discount to the end-user.

Making use of the mobile TV stream for download of the financial right and using such financial right through NFC payment is particularly advantageous because it allows a full getting and delivering process of the financial right which is easy, extremely fast and without any contact. The download of financial right in the mobile TV stream allows to carry out a large scale information and incentive campaign for a very low cost onto the actors of such a campaign.

## Claims

1. A digital method for transferring a financial right comprising the step which consists in transiting a financial right over a digital channel from a right delivering entity to a right benefiting entity (30), **characterized in that** the digital channel is a mobile TV broadcast stream (60).

2. The method for transferring a financial right according to claim 1, **characterized in that** it comprises the step which consists in requesting an end-user of the mobile equipment to perform a specific action onto the mobile equipment and the step which consists in making the financial right available to the end-user in the mobile equipment when the end-user performs the specific action onto the mobile equipment.

3. The method according to the preceding claim, **characterized in that** the step of requesting the end-user to perform a specific action onto the mobile equipment consists in displaying an invitation (33) in a broadcasted image displayed onto the mobile equipment inviting the end-user to actuate an option to display a particular information message.

4. The method according to claim 2, **characterized in that** it comprises the step which consists in providing an application in the mobile equipment (30) which monitors the specific action of the end-user.

5. The method according to the preceding claim, **characterized in that** it comprises the step which consists in providing a secure token (32) as a part of the mobile equipment and hosting the monitoring application inside the secure token.

6. The method according to anyone of the preceding claims, **characterized in that** it comprises the step which consists in providing a secure token (32) as a part of the mobile equipment and the step which consists in storing the financial right in the secure token.

7. The method according to anyone of the preceding claims, **characterized in that** it comprises the step which consists in providing a Near Field Communication mobile equipment (30) and the step of transiting the financial right consists in transiting a financial right which is operable in a Near Field Communication payment.
